# EUROPEAN PATENT APPLICATION

(11) **EP 2 631 788 A1**
(43) Date of publication of application: **28.08.2013**
(21) Application number: 10858558.9
(22) Date of filing: 13.12.2010
(51) Int. Cl.: G06F 9/44

(54) **METHOD AND MOBILE TERMINAL FOR RECOGNIZING HARDWARE GESTURES**

(30) Priority: 22.10.2010 CN 201010516703
(71) Applicant: ZTE Corporation, Shenzhen, Guangdong 518057 (CN)
(72) Inventor: WEI, Lanying, Shenzhen Guangdong 518057 (CN); ZHAO, Wei, Shenzhen Guangdong 518057 (CN); YANG, Xinli, Shenzhen Guangdong 518057 (CN); HU, Bo, Shenzhen Guangdong 518057 (CN)
(74) Representative: Modiano, Micaela Nadia
(86) International application number: PCT/CN2010/079696
(87) International publication number: WO 2012/051770

(57) **Abstract**

The present disclosure provides a method for recognizing a hardware gesture, which includes: obtaining the touch control information of fingers on the touch screen of a mobile terminal and preprocessing the data in the touch control information; and recognizing a hardware gesture according to the preprocessed data. The present disclosure also provides a mobile terminal for recognizing a hardware gesture. With the technical solution of the present disclosure, the recognition of the hardware gestures of the mobile terminal can be realized quickly and efficiently.

## Description

### TECHNICAL FIELD

The present disclosure relates to the gesture recognition technology in the mobile terminal field, particularly to a method and mobile terminal for recognizing a hardware gesture.

### BACKGROUND

The rapid development of mobile communication has more or less caused changes of all social aspects. At present, mobile terminals have become an indispensable part of the life of almost everybody. In the future, the naturalness, multi-channel and collaboration will be the main development directions of the man-machine interaction of mobile terminals. Attempts will be made to form multi-channel multimode natural dialogues between users and mobile terminals through gestures, voice, expressions and other human's natural communication means, thereby improving user experience effect. The development trend of the User Interface (UI) of mobile terminals from "technology centered" to "user centered" makes the natural and intuitive man-machine interaction become an inevitable development trend of the UI. Wherein gesture-based interaction as a UI interactive form suiting the trend of natural interaction is attracting increasing attention and being more widely applied.

Mobile terminal manufacturers have made great effort in UI technology, including UI design, mouse, keyboard, tracking ball, gravity sensor and etc. Following the popularization of intelligent mobile terminals, the functions of a touch screen become increasingly irreplaceable, while gesture also becomes a new technique of man-machine interaction owing to its novelty, convenience and usability. The man-machine interaction which is based on natural gestures and allows touching with two fingers is a new interactive technique for natural and harmonious dialogues between users and mobile terminals. This method is a "user centered" interaction, differentiating from a conventional method by which the touch screen can be operated with only one finger, this method allows a user to operate one mobile terminal with a plurality of fingers in the same time and even allows a plurality of users to operate one mobile terminal in the same time. Operating with a plurality of fingers in the same time means the possibility of processing more complex tasks, so it is an urgent task for mobile terminal manufacturers to realize fast and efficient gesture-based interaction.

At present, Apple Inc. is doing research in this aspect. The realized functions mainly include Slide to Unlock, Pinch and Flip, but they focus on the UI design. Besides, there is also bottom-layer gesture interaction processing done by some touch screen manufacturers, which mainly research some bottom-layer algorithms and structures and can directly provide some complex hardware gestures for mobile terminals, for example, pinch gesture, rotation gesture and palm reject gesture. These hardware gestures may be obtained directly from the chip of the touch screen without peforming the calculation by using complex algorithms.

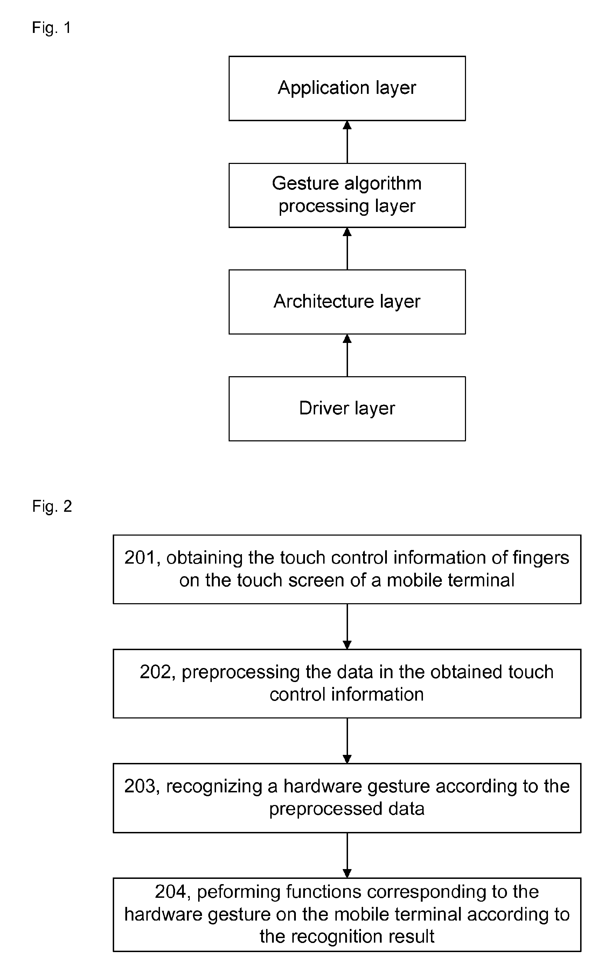

Fig. 1 is a schematic diagram illustrating structure of a system for realizing gesture recognition on an Android platform in the prior art. As shown in Fig. 1, the action of opening or closing two fingers is done once. Supposing the driver layer reports data to the architecture layer at a frequency of 80Hz, then the architecture layer needs to perform calculation 80*N times a second, wherein N represents the finger contact information needed by a complete event. The contact information mainly includes: coordinate value x and coordinate value y with the left top corner of the screen of the mobile terminal as the origin, finger width w, finger pressure p on the screen, value of Synchronize Multi-Touch Report (SYN_MT_REPORT), and value of Synchronize Report (SYN_REPORT). When there is only one finger, then N=6; when there are two fingers, then N=11; when there are M fingers, then N = 5*M+1. The architecture layer preprocesses the information of a complete event and puts the processed information in motion class. As the driver layer reports data to the architecture layer at a frequency of 80Hz, therefore motion can be generated at most 80 times a second. Then the data preprocessed each time which are in motion class are sent to the gesture algorithm processing layer where they are processed. The gesture algorithm processing layer performs processing once every 28ms, so calculation is conducted about 35 times a second.

In the foregoing method, the generated gestures are obtained by calculation through specific algorithm based on the coordinate information of each finger. The gesture recognition method is complicated and multiple calculation is needed, so the efficiency of gesture recognition is low.

### SUMMARY

In view of the above problem, the main object of the present disclosure is to provide a method and mobile terminal for recognizing a hardware gesture, which can realize fast and efficient recognition of the hardware gestures of a mobile terminal.

To achieve the foregoing object, the technical solutions of the present disclosure are realized in the following way.

The present disclosure provides a method for recognizing a hardware gesture, which includes:

obtaining touch control information of fingers on a touch screen of a mobile terminal;

preprocessing data in the touch control information; and

recognizing a hardware gesture according to the preprocessed data.

In the foregoing method, the obtaining the touch control information of fingers on the touch screen of the mobile terminal may include:

obtaining, by a chip in a driver layer of the mobile terminal, in real time the touch control information of fingers on the touch screen of the mobile terminal, and sending the touch control information to an architecture layer;

wherein the touch control information may include: coordinate values of fingers in a coordinate system with a left top corner of the touch screen of the mobile terminal as its origin, finger width, finger pressure on the touch screen, finger press and touch value, and hardware gesture information;

the hardware gesture information may include: directional information and amplitude information of closing or opening of two fingers, or directional information of left rotation or right rotation of two fingers and angular information of rotation of two fingers, or amplitude information of the hardware gesture.

In the foregoing method, the preprocessing the data in the touch control information may include:

recording, by the architecture layer of the mobile terminal, motion state information of fingers into objects of motion class according to the data in the touch control information; and

recording, by the architecture layer, the data in the touch control information and time of generating the hardware gesture into objects of motion class, and sending the data in the objects of motion class to a gesture algorithm processing layer;

wherein, the motion state information may include: one or more fingers being moving (ACTION_MOVE), all fingers being lifted (ACTION_UP) and one or more fingers pressing down (ACTION_DOWN).

In the foregoing method, the recognizing a hardware gesture according to the preprocessed data may include:

obtaining, by a gesture algorithm processing layer of the mobile terminal, a motion state of fingers on the touch screen according to the preprocessed data;

when a motion state is determined to be ACTION_MOVE and a new hardware gesture is generated, recognizing, by the gesture algorithm processing layer, the hardware gesture according to the received hardware gesture information of the touch control information of motion class.

In the foregoing method, the recognizing by the gesture algorithm processing layer the hardware gesture according to the received hardware gesture information of the touch control information of motion class may include:

when the hardware gesture is a pinch gesture, calculating, by the gesture algorithm processing layer, a strength factor of the hardware gesture according to the received hardware gesture information of the touch control information of motion class, and sending the strength factor of the hardware gesture to an application layer of the mobile terminal; or

when the hardware gesture is a rotation gesture, reading, by the gesture algorithm processing layer, the received hardware gesture information of the touch control information of motion class, and sending directional information and angular information of the hardware gesture obtained to the application layer of the mobile terminal; or

when the hardware gesture is a palm reject gesture, reading, by the gesture algorithm processing layer, the received hardware gesture information of the touch control information of motion class, comparing a size of amplitude information in the hardware gesture information with a size of a preset threshold of palm reject; ending the flow when the amplitude information is not smaller than the threshold of palm reject, and performing corresponding processing when the amplitude information is smaller than the threshold of palm reject.

The foregoing method may also include: performing functions corresponding to the hardware gesture on the mobile terminal according to a recognition result.

In the foregoing method, the performing functions corresponding to the hardware gesture on the mobile terminal according to a recognition result may incude:

when the hardware gesture is a pinch gesture:

performing contraction of a picture on the mobile terminal when a strength factor of the hardware gesture is smaller than 1;

performing enlargement of a picture on the mobile terminal when the strength factor of the hardware gesture is greater than 1; and

performing no operation when the strength factor of the hardware gesture is 1;

wherein, a proportion of the contraction or enlargement is determined according to the strength factor of the hardware gesture.

In the foregoing method, the performing functions corresponding to the hardware gesture on the mobile terminal according to the recognition result may include:

when the hardware gesture is a rotation gesture:

performing a clockwise rotation of a picture on the mobile terminal when directional information is greater than 0;

performing an anticlockwise rotation of a picture on the mobile terminal when the directional information is smaller than 0; and

performing no operation when the directional information is 0;

wherein an rotation angle is determined according to the angular information of rotation of two fingers.

The present disclosure also provides a mobile terminal for recognizing a hardware gesture, which includes: a driver layer, an architecture layer and a gesture algorithm processing layer; wherein:

the driver layer is configured to obtain touch control information of fingers on a touch screen of the mobile termina;

the architecture layer is configured to preprocess data in the touch control information; and

the gesture algorithm processing layer is configured to recognize a hardware gesture according to the preprocessed data.

The foregoing mobile terminal may further include:

an application layer configured to perform functions corresponding to the hardware gesture on the mobile terminal according to a recognition result.

The method and mobile terminal for recognizing a hardware gesture provided by the present disclosure obtain the touch control information of fingers on the touch screen of a mobile terminal and preprocess the data in the touch control information; and recognize a hardware gesture of the mobile terminal according to the preprocessed data. Moreover, in the gesture algorithm processing layer, the application of a hardware gesture may be realized by only calculating the strength factor of the hardware gesture, or by directly sending the data read to the application layer without calculation. In this way, the calculation quantity of the gesture algorithm processing layer is reduced significantly, the response speed of the mobile terminal is raised, hardware gestures can be recognized quickly and efficiently, thus good user experience is provided to the users of mobile terminals with the touch screen and user's operation becomes more convenient and faster.

Further, the present disclosure retains the application of the simple gestures in the original system, so there is no need to expand many hardware gesture interfaces and the maintenance is convenient. On the other hand, obtaining hardware gesture information directly from the chip of the touch screen of the mobile terminal saves the time which is otherwise spent on the recognition and calculation of complex hardware gestures, and improves the work efficiency of the mobile terminal.

### BRIEF DESCRIPTION OF THE DRAWINGS

Fig. 1 is a schematic diagram illustrating structure of a system for realizing gesture recognition on an Android platform in the prior art;

Fig. 2 is a schematic flowchart illustrating a method for recognizing a hardware gesture according to the present disclosure;

Fig. 3 is a schematic diagram illustrating the data format under the condition that a hardware gesture is generated according to the present disclosure;

Fig. 4 is a schematic diagram illustrating structure of a mobile terminal for recognizing a hardware gesture according to the present disclosure.

### DETAILED DESCRIPTION

The basic principle of the present disclosure: obtaining the touch control information of fingers on the touch screen of a mobile terminal and preprocessing the data in the touch control information; and recognizing a hardware gesture according to the preprocessed data.

Below the present disclosure is further elaborated by referring to accompanying drawings and embodiments.

The present disclosure provides a method for recognizing a hardware gesture. Fig. 2 is a schematic flowchart illustrating a method for recognizing a hardware gesture according to the present disclosure. As shown in Fig. 2, the method includes the following steps.

Step 201: obtaining the touch control information of fingers on the touch screen of a mobile terminal.

Specifically, the chip in the driver layer of the mobile terminal obtains the touch control information of fingers on the touch screen of the mobile terminal in real time from the chip of the touch screen of the mobile terminal, wherein, when the gesture on the touch screen of the mobile terminal is a simple gesture, for example the gesture of one finger, like click, double click, long press or drag, then the touch control information includes: coordinate values x and y of the finger in a coordinate system with the left top corner of the touch screen of the mobile terminal as its origin, finger width w and finger pressure p. When the gesture on the touch screen of the mobile terminal is a complex gesture of two or more fingers, i.e., a hardware gesture, then the touch control information includes: coordinate values x and y of any finger in the hardware gesture in a coordinate system with the left top corner of the touch screen of the mobile terminal as its origin, finger width w, finger pressure p on the touch screen, and the hardware gesture information of the hardware gesture.

If the hardware gesture is a pinch gesture, the hardware gesture information includes the directional information O of the closing or opening of two fingers and the amplitude information A of the closing or opening of two fingers. When the hardware gesture is a rotation gesture, the hardware gesture information includes the directional information O of left rotation or right rotation of two fingers and the angular information *ω* of the rotation of two fingers. When the hardware gesture is a palm reject gesture, the hardware gesture information includes the amplitude information A of the hardware gesture. The driver layer may determine the type of the hardware gesture according to the content of the message sent by the chip of the touch screen of the mobile terminal.

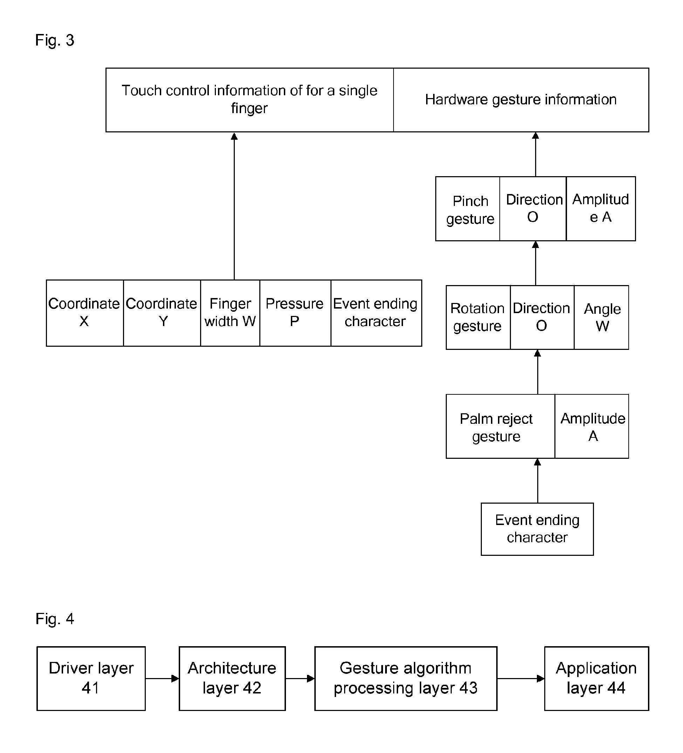

Here, the driver layer encapsulates the touch control information in a data format as shown in Fig. 3. Fig. 3 is a schematic diagram illustrating the data format under the condition that a hardware gesture is generated according to the present disclosure. The driver layer sends the encapsulated touch control information to the architecture layer via a transmission channel connecting the driver layer and the architecture layer, wherein the driver layer sends the encapsulated touch control information to the architecture layer at a frequency, which is called interruption frequency. Different touch screen manufacturers provide different interruption frequencies, which are typically 60Hz∼80Hz, and the interruption frequency is up to 250Hz in particular cases.

Step 202: preprocessing the data in the obtained touch control information.

Specifically, the architecture layer of the mobile terminal receives the touch control information from the driver layer according to the data format of the touch control information sent by the driver layer. For example, when the driver layer sends the touch control information in a sequence of coordinate value x, coordinate value y, finger width w, finger pressure p on the touch screen and hardware gesture information, the architecture layer will analyze the touch control information in a reverse sequence of hardware gesture information, finger pressure p on the touch screen, finger width w, coordinate value y and coordinate value x.

Here, the architecture layer preprocesses the data in the received touch control information, i.e., recognizes the number of fingers according to the data in the received touch control information, and records the motion state information of fingers into motion class according to the change of the number of fingers. The motion state information includes: ACTION_MOVE, ACTION_UP and ACTION_DOWN. ACTION_MOVE means one or more fingers are moving, ACTION_UP means all fingers are lifted, and ACTION_DOWN means one or more fingers are pressing down.

Meanwhile, the architecture layer records the data in the touch control information into the objects of motion class. When the gesture is a hardware gesture, then the touch control information has included hardware gesture information, and the time of generating the hardware gesture also needs to be recorded into the objects of this motion class; the architecture layer sends the data in motion class to the gesture algorithm processing layer; the motion class is a class program language, data of a same nature are stored in a motion class. In the present disclosure, motion class is equivalent to a storage medium where the touch control information is stored and preprocessed.

The coordinate values x and y of any finger, finger width w and finger pressure p on the touch screen in the hardware gesture of the touch control information obtained in step 201 are used to carry the hardware gesture information of the hardware gesture and the time of generating the hardware gesture, i.e., realize transparent transmission of the hardware gesture information and the time of generating the hardware gesture to the gesture algorithm processing layer.

Step 203: recognizing a hardware gesture according to the preprocessed data.

Specifically, when the data in motion class received by the gesture algorithm processing layer of the mobile terminal from the architecture layer do not include the hardware gesture information and the time of generating the hardware gesture, it is indicated that the gesture on the touch screen of the mobile terminal is a simple gesture, and the processing flow of a simple gesture will be executed. As the processing flow belongs to the prior art, it is not elaborated here.

If the data in motion class received by the gesture algorithm processing layer of the mobile terminal from the architecture layer include the hardware gesture information and the time of generating the hardware gesture, it is indicated that the gesture on the touch screen of the mobile terminal is a complex gesture, the gesture algorithm processing layer may know the motion state of fingers on the touch screen according to the received motion state information; the gesture algorithm processing layer obtains the motion state information of fingers according to the data in motion class. When the motion state information is ACTION_UP or ACTION_DOWN, it is indicated that all fingers are lifted, or one or more fingers press down, so no finger is moving on the mobile terminal, and no hardware gesture is generated. Therefore, recognition of a hardware gesture is not needed and the flow is ended.

If the the motion state information is ACTION_MOVE, when determining the number of fingers moving on the touch screen is two, the gesture algorithm processing layer determines whether the received time of generating the hardware gesture in motion class is consistent with the time of generating the hardware gesture in motion class which is received last time, if not, it is indicated that a new hardware gesture is generated, and the hardware gesture will be recognized according to the received hardware gesture information of motion class; otherwise, it is indicated that no new hardware gesture is generated and the flow is ended.

Recognizing the hardware gesture by the gesture algorithm processing layer according to the preprocessed data, i.e., the received hardware gesture information of the touch control information of motion class may include:

if the hardware gesture is a pinch gesture, the gesture algorithm processing layer will read the received hardware gesture information of the touch control information of motion class, wherein when the directional information O is a positive value, it is indicated that the two fingers are opened, and when the directional information O is a negative value, it is indicated that the two fingers are closed; the strength factor of the hardware gesture is calculated with Formula Math.abs (A/30+1). The gesture algorithm processing layer sends the recognition result, i.e., the strength factor of the hardware gesture obtained by calculation, to the application layer of the mobile terminal; the parameter A contains directional information O and amplitude information A, and may be either a positive or negative value; the strength factor may be applied in a picture database as the multiple of one-time enlargement or contraction; pinch gestures are mainly applied in picture database, browser and google map;

if the hardware gesture is a rotation gesture, the gesture algorithm processing layer will read the received hardware gesture information of the touch control information of motion class, and read directional information O in the hardware gesture information; when the directional information O is a positive value, it is indicated that the two fingers rotate clockwise. When the directional information O is a negative value, it is indicated that the two fingers rotate anticlockwise, the gesture algorithm processing layer reads the angular information *ω* of rotation of the two fingers, and sends the recognition result, i.e., the directional information O and angular information *ω* of the hardware gesture obtained to the application layer of the mobile terminal; the rotation gestures are mainly applied to the picture database and camera focusing function;

if the hardware gesture is a palm reject gesture, the threshold of palm reject will be preset in advance according to user' requirements; the gesture algorithm processing layer will read the received hardware gesture information of the touch control information of motion class, and read amplitude information A in the hardware gesture information; when the amplitude information A is not smaller than the present threshold of palm reject, it is indicated that the contact area of the hardware gesture on the touch screen is too large, no processing will be performed and the flow is ended; when the amplitude information A is smaller than the present threshold of palm reject, it is indicated that the contact area of the hardware gesture on the touch screen is small, for example, when there is one finger or two fingers, then corresponding processing is performed; the processing process for a single finger belongs to the prior art, so it is not elaborated here, and the processing process for two fingers may be performed according to the method in this embodiment.

The foregoing processing method for a palm reject gesture is mainly for preventing misoperation. For example, when a user is making or receiving a call via a mobile terminal with a touch screen, the user's face will be against the touch screen. If the foregoing processing method is adopted, the mobile terminal will perform the operation according to user's touch, thus generating misoperation and affecting user's incoming or outgoing call. If the foregoing processing method is adopted, even if user's face is against the touch screen, as the contact area is large, the hardware gesture is invalid and, the mobile terminal will perform no operation according to user's touch, thereby avoiding the misoperation.

Step 204: peforming functions corresponding to the hardware gesture on the mobile terminal according to the recognition result.

Specifically, the application layer of the mobile terminal receives the recognition result from the gesture algorithm processing layer.

If the hardware gesture is a pinch gesture and the strength factor of the hardware gesture is smaller than 1, it is indicated that the two fingers are closed. For example, the function of contracting a picture may be performed on the mobile terminal, and the proportion of the contraction is determined according to the strength factor of the hardware gesture. When the strength factor of the hardware gesture is greater than 1, it is indicated that the two fingers are open. For example, the function of enlarging a picture may be performed on the mobile terminal, and the proportion of the enlargement is determined according to the strength factor of the hardware gesture. When the strength factor of the hardware gesture is equal to 1, it is indicated that neither of the two fingers moves on the touch screen of the mobile terminal and no operation will be executed.

If the hardware gesture is a rotation gesture, the function of rotating a picture may be performed on the mobile terminal. When the directional information O is greater than 0, it is indicated that the two fingers rotate clockwise. For example, the function of clockwise rotation of a picture may be performed on the mobile terminal, and the rotation angle is determined according to the angular information *ω* of the rotation of the two fingers. When the directional information O is smaller than 0, it is indicated that the fingers rotate anticlockwise. For example, the function of anticlockwise rotation of a picture may be performed on the mobile terminal, and the rotation angle is determined according to the angular information *ω* of the rotation of the two fingers. When the directional information O is 0, it is indicated that neither of the two fingers moves on the touch screen of the mobile terminal and no operation will be executed.

Further, the present disclosure may be applied in various operating systems, such as: Windows Mobile operating system, Symbian operating system and Android operating system, and may also be applied in Global Positioning System.

To realize the foregoing method, the present disclosure also provides a mobile terminal for recognizing a hardware gesture. Fig. 4 is a schematic diagram illustrating structure of a mobile terminal for recognizing a hardware gesture according to the present disclosure. As shown in Fig. 4, the mobile terminal includes: a driver layer 41, an architecture layer 42 and a gesture algorithm processing layer 43, wherein|:

the driver layer 41 is configured to obtain the touch control information of fingers on the touch screen of the mobile terminal;

the architecture layer 42 is configured to preprocess the data in the touch control information;

the gesture algorithm processing layer 43 is configured to recognize a hardware gesture according to the preprocessed data.

The mobile terminal may further include: an application layer 44, which is configured to perform the functions corresponding to the hardware gesture on the mobile terminal according to the recognition result.

Obtaining the touch control information of fingers on the touch screen of a mobile terminal includes: the chip in the driver layer 41 of the mobile terminal obtains in real time the touch control information of fingers on the touch screen of the mobile terminal and sends the touch control information to the architecture layer 42.

The touch control information includes: the coordinate values of fingers in a coordinate system with the left top corner of the touch screen of the mobile terminal as its origin, finger width, finger pressure on the touch screen, finger press and touch value, and hardware gesture information.

The hardware gesture information includes: the directional information of the closing or opening of two fingers and the amplitude information of the closing or opening of two fingers, or the directional information of left rotation or right rotation of two fingers and the angular information of the rotation of two fingers, or the amplitude information of the hardware gesture.

Preprocessing the data in the touch control information includes: the architecture layer 42 of the mobile terminal records the motion state information of fingers into the objects of motion class according to the data in the touch control information. The architecture layer 42 records the data in the touch control information and the time of generating the hardware gesture into the objects of motion class, and sends the data in the objects of motion class to the gesture algorithm processing layer 43.

The motion state information includes: one or more fingers being moving (ACTION_MOVE), all fingers being lifted (ACTION_UP) and one or more fingers pressing down (ACTION_DOWN).

Recognizing a hardware gesture according to the preprocessed data includes: the gesture algorithm processing layer 43 of the mobile terminal obtains the motion state of fingers on the touch screen according to the preprocessed data; when it is determined that the motion state is ACTION_MOVE and that a new hardware gesture is generated, the gesture algorithm processing layer 43 recognizes the hardware gesture according to the received hardware gesture information of the touch control information of motion class.

Recognizing a hardware gesture by the gesture algorithm processing layer 43 according to the received hardware gesture information of the touch control information of motion class includes: when the hardware gesture is a pinch gesture, then the gesture algorithm processing layer 43 calculates the strength factor of the hardware gesture according to the received hardware gesture information of the touch control information of motion class, and sends the strength factor of the hardware gesture to the application layer 44 of the mobile terminal.

Recognizing a hardware gesture by the gesture algorithm processing layer 43 according to the received hardware gesture information of the touch control information of motion class includes: when the hardware gesture is a rotation gesture, the gesture algorithm processing layer 43 reads the received hardware gesture information of the touch control information of motion class, and sends the directional information and angular information of the hardware gesture obtained to the application layer 44 of the mobile terminal.

Recognizing a hardware gesture by the gesture algorithm processing layer 43 according to the received hardware gesture information of the touch control information of motion class includes: when the hardware gesture is a palm reject gesture, the gesture algorithm processing layer 43 reads the received hardware gesture information of the touch control information of motion class, compares the size of the amplitude information in the hardware gesture information with the size of the preset threshold of palm reject, and ends the flow when the amplitude information is not smaller than the threshold of palm reject; and performs the corresponding processing when the amplitude information is smaller than the threshold of palm reject.

Performing the functions corresponding to the hardware gesture on the mobile terminal according to the recognition result includes: when the hardware gesture is a pinch gesture and the strength factor of the hardware gesture is smaller than 1, contraction of a picture is performed on the mobile terminal, and the proportion of the contraction is determined according to the value of the strength factor of the hardware gesture; when the strength factor of the hardware gesture is greater than 1, enlargement of a picture is performed on the mobile terminal, and the proportion of the enlargement is determined according to the value of the strength factor of the hardware gesture; when the strength factor of the hardware gesture is equal to 1, no operation will be executed.

Performing the functions corresponding to the hardware gesture on the mobile terminal according to the recognition result includes: when the hardware gesture is a rotation gesture and the directional information is greater than 0, the clockwise rotation of a picture is performed on the mobile terminal; when the directional information is smaller than 0, the anticlockwise rotation of a picture is performed on the mobile terminal; wherein the rotation angle is determined according to the angular information of rotation of the two fingers; when the directional information is 0, no operation will be executed.

The foregoing descriptions are preferred embodiments of the present disclosure and are not intended to limit the protection scope of the present disclosure. Any modifications, identical replacements and improvements made without departing from the spirit and principle of the present disclosure shall be within the protection scope of the present disclosure.

## Claims

1. A method for recognizing a hardware gesture, comprising:
obtaining touch control information of fingers on a touch screen of a mobile terminal;
preprocessing data in the touch control information; and
recognizing a hardware gesture according to the preprocessed data.

2. The method according to claim 1, wherein the obtaining the touch control information of fingers on the touch screen of the mobile terminal comprises:
obtaining, by a chip in a driver layer of the mobile terminal, in real time the touch control information of fingers on the touch screen of the mobile terminal, and sending the touch control information to an architecture layer;
wherein the touch control information comprises coordinate values of fingers in a coordinate system with a left top corner of the touch screen of the mobile terminal as its origin, finger width, finger pressure on the touch screen, finger press and touch value, and hardware gesture information;
the hardware gesture information comprises: directional information and amplitude information of closing or opening of two fingers, or directional information of left rotation or right rotation of two fingers and angular information of rotation of two fingers, or amplitude information of the hardware gesture.

3. The method according to claim 1, wherein the preprocessing the data in the touch control information comprises:
recording, by the architecture layer of the mobile terminal, motion state information of fingers into objects of motion class according to the data in the touch control information; and
recording, by the architecture layer, the data in the touch control information and time of generating the hardware gesture into objects of motion class, and sending the data in the objects of motion class to a gesture algorithm processing layer;
wherein, the motion state information comprises: one or more fingers being moving (ACTION_MOVE), all fingers being lifted (ACTION_UP) and one or more fingers pressing down (ACTION_DOWN).

4. The method according to claim 1, wherein the recognizing a hardware gesture according to the preprocessed data comprises:
obtaining, by a gesture algorithm processing layer of the mobile terminal, a motion state of fingers on the touch screen according to the preprocessed data;
when a motion state is determined to be ACTION_MOVE and a new hardware gesture is generated, recognizing, by the gesture algorithm processing layer, the hardware gesture according to the received hardware gesture information of the touch control information of motion class.

5. The method according to claim 4, wherein the recognizing by the gesture algorithm processing layer the hardware gesture according to the received hardware gesture information of the touch control information of motion class comprises:
when the hardware gesture is a pinch gesture, calculating, by the gesture algorithm processing layer, a strength factor of the hardware gesture according to the received hardware gesture information of the touch control information of motion class, and sending the strength factor of the hardware gesture to an application layer of the mobile terminal; or
when the hardware gesture is a rotation gesture, reading, by the gesture algorithm processing layer, the received hardware gesture information of the touch control information of motion class, and sending directional information and angular information of the hardware gesture obtained to the application layer of the mobile terminal; or
when the hardware gesture is a palm reject gesture, reading, by the gesture algorithm processing layer, the received hardware gesture information of the touch control information of motion class, comparing a size of amplitude information in the hardware gesture information with a size of a preset threshold of palm reject; ending the flow when the amplitude information is not smaller than the threshold of palm reject, and performing corresponding processing when the amplitude information is smaller than the threshold of palm reject.

6. The method according to any of claims 1 to 5, further comprising: performing functions corresponding to the hardware gesture on the mobile terminal according to a recognition result.

7. The method according to claim 6, wherein the performing functions corresponding to the hardware gesture on the mobile terminal according to a recognition result comprises:
when the hardware gesture is a pinch gesture:
performing contraction of a picture on the mobile terminal when a strength factor of the hardware gesture is smaller than 1;
performing enlargement of a picture on the mobile terminal when the strength factor of the hardware gesture is greater than 1; and
performing no operation when the strength factor of the hardware gesture is 1;
wherein, a proportion of the contraction or enlargement is determined according to the strength factor of the hardware gesture.

8. The method according to claim 6, wherein the performing functions corresponding to the hardware gesture on the mobile terminal according to the recognition result comprises:
when the hardware gesture is a rotation gesture:
performing a clockwise rotation of a picture on the mobile terminal when directional information is greater than 0;
performing an anticlockwise rotation of a picture on the mobile terminal when the directional information is smaller than 0; and
performing no operation when the directional information is 0;
wherein an rotation angle is determined according to angular information of rotation of two fingers.

9. A mobile terminal for recognizing a hardware gesture, comprising: a driver layer, an architecture layer and a gesture algorithm processing layer; wherein:
the driver layer is configured to obtain touch control information of fingers on a touch screen of the mobile termina;
the architecture layer is configured to preprocess data in the touch control information; and
the gesture algorithm processing layer is configured to recognize a hardware gesture according to the preprocessed data.

10. The mobile terminal according to claim 9, further comprising:
an application layer configured to perform functions corresponding to the hardware gesture on the mobile terminal according to a recognition result.
